**Europäisches Patentamt**

(19) **European Patent Office**

**Office européen des brevets**

(11) Veröffentlichungsnummer: **0 017 013**
**B1**

(12) # EUROPÄISCHE PATENTSCHRIFT

(45) Veröffentlichungstag der Patentschrift:
26.05.82

(21) Anmeldenummer: **80101204.8**

(22) Anmeldetag: **10.03.80**

(51) Int. Cl.³: **C 01 B 33/28**

(54) Verfahren zur Herstellung von amorphen Natriumaluminiumsilikaten.

(30) Priorität: **15.03.79 DE 2910152**

(43) Veröffentlichungstag der Anmeldung:
**15.10.80 Patentblatt 80/21**

(45) Bekanntmachung des Hinweises auf die Patenterteilung:
**26.05.82 Patentblatt 82/21**

(84) Benannte Vertragsstaaten:
**AT BE CH DE FR GB IT NL SE**

(56) Entgegenhaltungen:
**DD-A-132 069**
**DE-A1-2 651 485**
**DE-A1-2 719 956**
**DE-A1-2 832 947**
**DE-B-1 038 015**
**DE-B-1 038 017**
**DE-B1-2 744 784**
**US-A-4 016 097**
**US-A-4 147 657**
**«Ullmanns Enzyklopädie der technischen Chemie», 4. Auflage, Band 3, 1973, VERLAG CHEMIE, Weinheim, S. 350–352**

(73) Patentinhaber: **Henkel Kommanditgesellschaft auf Aktien, Postfach 1100 Henkelstrasse 67, D-4000 Düsseldorf 1 (DE)**
Patentinhaber: **Degussa Aktiengesellschaft, Weissfrauenstrasse 9, D-6000 Frankfurt am Main 1 (DE)**

(72) Erfinder: **Christophliemk, Peter, Dr., Kärntner Weg 44 a, D-4000 Düsseldorf 13 (DE)**
Erfinder: **Wüst, Willi, Dr., Fasanenring 32, D-4030 Ratingen-Hösel (DE)**

«Verfahren zur Herstellung von amorphen Natriumaluminiumsilikaten»

Gegenstand der Erfindung ist ein Verfahren zur kontinuierlichen Herstellung feinteiliger röntgenamorpher Natriumaluminiumsilikate, die zur Umwandlung in feinstteilige zeolithische Natriumaluminiumsilikate befähigt sind, durch Vermischen einer wässrigen Natriumaluminatlösung mit einer wässrigen Natriumsilikatlösung in Gegenwart überschüssiger Natronlauge oberhalb Raumtemperatur.

Beim Vermischen von Natriumaluminat- mit Natriumsilikatlösungen bildet sich unter den genannten Bedingungen – insbesondere bei Temperaturen oberhalb 60 °C – bei allen in der Technik gebräuchlichen Ansatz- und Konzentrationsbereichen der Reaktionspartner augenblicklich ein Niederschlag von amorphem Natriumaluminiumsilikat. Von technischer Bedeutung ist insbesondere der nachstehende Ansatzbereich, welcher folgende Molverhältnisse der Reaktionspartner umfasst:

1,5 bis 9 $Na_2O$: 1 $Al_2O_3$ : 1 bis 7 $SiO_2$ : 40 bis 400 $H_2O$

Eine darüber hinausgehende Alkalität, ein höherer Silikatgehalt oder eine stärkere Verdünnung des Fällansatzes sind technisch nicht sinnvoll. Ein niedrigerer Wassergehalt des Ansatzes als der oben angegebene führt zu besonders starker Klumpenbildung im Niederschlag sowie zu uneinheitlichen Produkten.

Bei den genannten Ansatzverhältnissen fällt primär stets ein amorphes Natriumaluminiumsilikat mit einem hohen Überschuss an Natronlauge aus, welches eine chemische Zusammensetzung entsprechend Molverhältnissen von

1 bis 5 $Na_2O$ : 1 $Al_2O_3$ : 1,8 bis 4 $SiO_2$

aufweist. Nach Auswaschen des überschüssigen Alkalis erhält man röntgenamorphe Produkte mit einer chemischen Zusammensetzung entsprechend Molverhältnissen von

0,9 bis 1,1 $Na_2O$ : 1 $Al_2O_3$ : 1,8 bis 4 $SiO_2$,

deren Wassergehalt vom Trocknungsgrad abhängt. Der Silikatgehalt des Fällungsproduktes wird weitgehend vom Molverhältnis $SiO_2$ : $Al_2O_3$ im Fällansatz bestimmt.

Die beim Vermischen von Aluminat- mit Silikatlösungen oberhalb Raumtemperatur sich augenblicklich bildenden Niederschläge von amorphem Natriumaluminiumsilikat führen zur Bildung eines zunächst nicht mehr fliessfähigen Reaktionsgemisches. Dadurch wird einerseits eine gründliche und vollständige Durchmischung der beiden Reaktionskomponenten und somit auch der Erhalt eines homogenen Reaktionsproduktes erschwert sowie andererseits auch eine gewünschtenfalls anschliessende Kristallisation des amorphen Produktes verzögert. Darüber hinaus bedingt dieser Effekt die Bildung eines relativ grobkörnigen Produktes, das hohe Anteile mit einem Korndurchmesser grösser als 50 µm aufweist. Bei einer diskontinuierlich ausgeführten Fällung von Natriumaluminiumsilikat lässt sich das nicht mehr fliessfähige Reaktionsgemisch üblicherweise durch eine hinreichend lange Anwendung starker Scherkräfte wieder verflüssigen. Einer kontinuierlichen Ausfällung von amorphem Natriumaluminiumsilikat stand jedoch bislang im Wege, dass die zur Verfügung stehende – durch die kontinuierliche Verfahrensweise bedingt – nur kurze Zeitspanne nicht ausreichte, um das nicht fliessfähige Reaktionsgemisch hinreichend zu zerkleinern bzw. zu zerschlagen und es so wieder zu verflüssigen.

Die Aufgabe der vorliegenden Erfindung war es daher, ein Verfahren zur Herstellung amorpher Natriumaluminiumsilikate zu entwickeln, das einen kontinuierlichen Verfahrensablauf mit einer hohen Raum/Zeit-Ausbeute auch ohne die Anwendung starker Scherkräfte ermöglicht, bei dem jedoch die vorstehend erwähnten Nachteile vermieden werden.

Gegenstand der Erfindung ist somit ein Verfahren zur kontinuierlichen Herstellung einer wässrigen, alkalischen Suspension feinteiliger röntgenamorpher Natriumaluminiumsilikate, die zu mindestens 99 Vol.-% eine Teilchengrösse von kleiner als 50 µm aufweisen und zur Umwandlung in feinstteilige zeolithische Natriumaluminiumsilikate befähigt sind, durch Vermischen einer wässrigen Natriumaluminatlösung mit einer wässrigen Natriumsilikatlösung in Gegenwart überschüssiger Natronlauge bei Temperaturen im Bereich von 20 bis 103 °C, wobei die beiden zu vermischenden Lösungen eine rechnerische Gesamtzusammensetzung bezüglich der Molverhältnisse von

1,5 bis 9 $Na_2O$ : 1 $Al_2O_3$ : 1 bis 7 $SiO_2$ : 40 bis 400 $H_2O$

aufweisen, das dadurch gekennzeichnet ist, dass man eine der beiden Reaktionskomponenten kontinuierlich in eine stufig wirkende Mischstrecke einströmen lässt und die zweite Reaktionskomponente aufgeteilt in drei oder mehr Teilströme, deren Dosierung insgesamt durch die rechnerische Gesamtzusammensetzung der beiden Lösungen vorgegeben ist, mit der ersten Reaktionskomponente vermischt, wobei man den ersten Teilstrom dem Strom der ersten Reaktionskomponente unmittelbar kontinuierlich zufügt und die weiteren Teilströme dem Strom des gebildeten Reaktionsgemisches erst stromabwärts, jeweils nach einer mittleren Verweilzeit der Reaktionspartner in der Mischstrecke von mindestens 5 Sekunden, gleichfalls kontinuierlich zudosiert.

Von wesentlicher Bedeutung für das erfindungsgemässe Verfahren ist mithin das Aufteilen oder Splitten der zweiten Reaktionskomponente in mehrere Teilströme, die getrennt voneinander mit dem Strom er ersten Reaktionskomponente bzw. des Reaktionsgemisches vermischt werden. Während die erste Reaktionskomponente in einem ungeteilten Strom kontinuierlich in die Mischstrecke einfliesst, wird gleichzeitig die zweite Reaktionskomponente zunächst nur im Unterschuss, bezogen auf die rechnerische Gesamtzusammensetzung der beiden zu vermischenden Lösungen, dem Strom der ersten Reaktionskomponente kontinuierlich zugefügt und der Rest dieser zweiten Reaktionskomponente erst dem Strom des bereits vorliegenden Reationsgemisches in mehreren Anteilen – jeweils mit einer zeitlichen Verzögerung – kontinuierlich zudosiert.

Durch das Aufteilen bzw. Splitten einer der beiden Reaktionskomponente lässt sich in technisch einfacher Weise eine erhebliche zeitliche Strekkung der Ausfällung des amorphen Natriumaluminiumsilikates in der Mischstrecke erreichen und – als unmittelbare Folge dieses Effektes – die Ausbildung eines nicht mehr fliessfähigen Reaktionsgemisches auch ohne Anwendung starker Scherkräfte wirksam verhindern. Bei Anwendung des erfindungsgemässen kontinuierlichen Verfahrens resultiert somit eine gut fliessfähige, homogene Suspension von feinteiligen, kristallisationsfähigen, amorphen Natriumaluminiumsilikat-Partikeln, die zu mindestens 99 Vol.-% kleiner als 50 µm sind.

Hierbei ist zu berücksichtigen, dass die Dosierung der beiden Reaktionspartner insgesamt durch die rechnerische Gesamtzusammensetzung der zu vermischenden Lösungen vorgegeben ist.

Erfindungsgemäss bevorzugt sind Fällungsansätze, bei denen die beiden zu vermischenden Lösungen eine rechnerische Gesamtzusammensetzung bezüglich der Molverhältnisse von

1,5 bis 6 $Na_2O$ : 1 $Al_2O_3$ : 1,3 bis 2,5 $SiO_2$ : 40 bis 150 $H_2O$,

insbesondere im Bereich von

3 bis 5,5 $Na_2O$ : 1 $Al_2O_3$ : 1,7 bis 2,0 $SiO_2$ : 70 bis 110 $H_2O$

aufweisen. Die amorphen, von überschüssigem Alkali befreiten Produkte weisen dann eine chemische Zusammensetzung entsprechend Molverhältnisse von

0,9 bis 1,1 $Na_2O$ : 1 $Al_2O_3$ : 1,8 bis 2 $SiO_2$

mit einem vom Trocknungsgrad abhängigen Wassergehalt auf.

Andererseits zeichnen sich die amorphen, noch überschüssiges Alkali enthaltenden Fällungsprodukte dadurch aus, dass sie sich leicht in hochkristalline Natriumaluminiumsilikate unterschiedlichen Typs umwandeln lassen. Bei den vorstehend angegebenen bevorzugten Fällungsansätzen resultieren durch Kristallisation des amorphen Primärproduktes feinstteilige zeolithische Molekularsiebe vom Typ NaA mit Korngrössenanteilen kleiner als 10 µm von über 95 Vol.-% und Nasssiebrückständen grösser oder gleich 50 µm von weniger als 1 Gew.-%. Die chemische Zusammensetzung des Molekularsiebs NaA – einem Natriumaluminiumsilikat, dem besondere technische Bedeutung zukommt, – entspricht der Summenformel

1 ± 0,2 $Na_2O$ · 1 $Al_2O_3$ · 2 ± 0,2 $SiO_2$ · 0 bis 6 $H_2O$.

Das üblicherweise zur Identifizierung des Molekularsiebs NaA herangezogene Röntgendiffraktogramm ist beispielsweise in den deutschen Auslegeschriften DE-B-10 38 015 und DE-B-10 38 017 angegeben.

Wie vorstehend bereits erläutert, bedingt das Aufteilen einer der beiden Reaktionskomponenten in mindestens drei Teilströme eine wesentliche Viskositätsverringerung des Reaktionsgemisches und damit dessen verbesserte Fliessfähigkeit. Im Sinne des erfindungsgemässen Verfahrens ist es hierbei von Vorteil, dass man mit dem ersten Teilstrom nur 40 bis 60% der zweiten Reaktionskomponente, bezogen auf das durch die rechnerische Gesamtzusammensetzung vorgegebene Verhältnis der beiden Lösungen, dem Strom der ersten Reaktionskomponente kontinuierlich zufügt. Zweckmässigerweise wird der Rest der zweiten Reaktionskomponente dann dem Strom des bereits gebildeten Reaktionsgemisches in zwei bis vier Teilströmen zudosiert, wobei die einzelnen Teilströme stromabwärts jeweils gleiche oder geringere prozentuale Anteile der zweiten Reaktionskomponente, gleichfalls bezogen auf das durch die rechnerische Gesamtzusammensetzung vorgegebene Verhältnis der beiden Lösungen, umfassen. Eine Aufteilung in mehr als fünf Teilströme erfordert einen grösseren technischen Aufwand hinsichtlich des Dosierens, ohne dass dabei merkliche Verfahrens oder Produktvorteile resultieren. Bei dem erfindungsgemässen kontinuierlichen Ausfällen von amorphem Natriumaluminiumsilikat ist mithin das Splitten einer der beiden Reaktionskomponenten in drei bis fünf Teilströme bevorzugt.

Prinzipiell kann hierbei jede der beiden Komponenten – das heisst entweder die Aluminatlösung oder aber die Silikatlösung – in Teilströme gesplittet werden. Erfindungsgemäss bevorzugt ist es jedoch, die Aluminatlösung als zweite Reaktionskomponente in Teilströme aufzuteilen, da diese Verfahrensweise zu besonders feinteiligen Reaktionsprodukten führt.

Hinsichtlich der Fällungstemperatur ist des bei dem erfindungsgemässen Verfahren von Vorteil, dass man das Vermischen der beiden Reaktionskomponenten bei einer, bis auf Abweichungen von ±2 °C konstanten Temperatur, vorzugsweise im Bereich von 50 bis 80 °C, durchführt.

Als stufig wirkende Mischstrecken im Sinne der Erfindung können solche Reaktoren Verwendung finden, die ein kontinuierliches Vermischen der Reaktionspartner entlang eines Reaktionsweges sowie die Zuführung eines der Reaktionspartner in Form von Teilströmen ermöglichen, wobei «stufig wirkend» eine Einschränkung der Vor- beziehungsweise Rückströmung des Reaktionsgemisches in der Mischstrecke charakterisiert. Hinsichtlich der Dimensionierung der Mischstrecke ist ausser dem angestrebten Mengendurchsatz einerseits die gewählte Anzahl von Teilströmen der zweiten Reaktionskomponente sowie andererseits die für ein optimales Vermischen erforderliche mittlere Verweilzeit der Reaktionspartner innerhalb der gesamten Mischstrecke zu berücksichtigen. Die mittlere Verweilzeit ergibt sich hierbei aus dem Gesamtvolumen der in die Mischstrecke einströmenden Lösungen pro Mischervolumen und Stunde.

Nach einer besonderen Ausführungsform des erfindungsgemässen Verfahrens führt man die einzelnen Teilströme der zweiten Reaktionskomponente jeweils in unterschiedliche Abschnitte eines Rohrreaktors, der ein Verhältnis von Rohrlänge zu Rohrdurchmesser von mehr als 500 aufweist, ein.

Beim Rohrreaktor (oder auch «Strömungsrohr») wird das Reaktionsvolumen von einem Rohr gebildet, dessen Länge in der Regel sehr gross ist im Vergleich zu seinem Durchmesser. Das Anfangsgemisch bzw. die Reaktanden treten an dem einen Ende des Rohres ein, das Endgemisch wird am anderen Ende ausgetragen. Für das ideale Strömungsrohr wird angenommen, dass keine Vermischung zwischen den einzelnen Volumenelementen der Reaktionsmischung in Strömungsrichtung stattfindet und dass die Zusammensetzung der Reaktionsmischung an jeder Stelle des Rohres über den Querschnitt konstant ist. Man kann diese Bedingungen in erster Näherung durch die Annahme einer sogenannten Kolben- oder Pfropfenströmung beschreiben. Die Änderungen der Konzentrationen längs des Rohres sind abhängig von dem Durchsatz.

Die Verweilzeitverteilung eines realen Strömungsrohrs unterscheidet sich von derjenigen eines idealen und ist abhängig von REYNOLDS-Zahl, Rohrkrümmungen, Rohrprofil, Rohreinbauten, Wandrauhigkeiten, Strömungsverhältnissen am Eingang und Ausgang des Rohres, Zähigkeitsunterschieden des Reaktionsgemisches und ähnlichen Parametern. Kenntnisse über die Verweilzeitverteilung in einem gegebenen Rohrreaktor kann man sich entweder durch Messung verschaffen oder indem man die Betriebsbedingungen so wählt, dass sie weitgehend ideal sind.

Angaben zum Aufbau und Betreiben von Rohrreaktoren einschliesslich deren mathematischer Behandlung lassen sich Lehrbüchern der technischen Chemie entnehmen, beispielsweise «Ullmanns Encyklopädie der technischen Chemie», 4. Auflage, Band 3: «Verfahrenstechnik II und Reaktionsapparate», 1973, Verlag Chemie, Seiten 350 bis 352.

Erfindungsgemäss werden der Gesamtstrom der ersten Reaktionskomponente sowie der erste Teilstrom der zweiten Reaktionskomponente gleichzeitig kontinuierlich an einem Ende des Rohrreaktors mit Hilfe entsprechender Dosiereinrichtungen eingeführt. Stromabwärts wird dann in das gebildete Reaktionsgemisch jeweils nach einer mittleren Verweilzeit von 5 bis 60 Sekunden ein weiterer Teilstrom der gesplitteten zweiten Reaktionskomponente eingespeist. Die mittlere Verweilzeit auf der nach vollständiger Zuführung aller Komponenten noch verbleibenden Mischstrecke sollte mindestens 3 Minuten betragen.

Vorzugsweise lässt man den Gesamtproduktstrom, das heisst den Strom der ersten Reaktionskomponente einerseits sowie die Teilströme der zweiten Reaktionskomponente andererseits, insgesamt mit einer Dosiergeschwindigkeit von 2 bis 20 m³ Lösung, vorzugsweise mehr als 3 m³ Lösung, pro Kubikmeter Mischervolumen und Stunde in den Rohrreaktor einströmen, wobei die mittlere Verweilzeit der Reaktionspartner insgesamt im Rohrreaktor 3 bis 30 Minuten, vorzugsweise 5 bis 20 Minuten beträgt.

Während der Fällungs- und Mischvorgänge im Rohrreaktor ändern sich verschiedene Eigenschaften des flüssigen Reaktionsgemisches, insbesondere dessen Viskosität, die ein ausgeprägtes Maximum durchschreitet. Es kann daher von Vorteil sein, den Rohrreaktor nicht mit konstantem Rohrdurchmesser auszulegen, sondern in der Art, dass in Abhängigkeit von den jeweiligen Fliesseigenschaften (vor allem Viskosität) optimale Strömungsverhältnisse resultieren. Auf diese Weise lässt sich das Reaktorvolumen ohne Verlängerung des Rohres vergrössern.

Sowohl der Rohrreaktor selbst als auch die Zuführungen können ganz oder teilweise mit einem Heizmantel für Wasserdampf, Heisswasser oder anderen gebräuchlichen Wärmeübertragungsmedien umgeben sein. Die kontinuierliche Fällung lässt sich so weitgehend isotherm, das heisst mit einer Toleranz von ±2 °C, ausführen und Wärmeabstrahlungen können ausgeglichen werden. Gegebenenfalls kann auch der Bereich des Mischerausflusses eine zusätzliche Ummantelung aufweisen, um entweder das Fällungsprodukt abzukühlen oder aber von der Fällungstemperatur auf die erforderliche Kristallisationstemperatur aufzuheizen.

Das erfindungsgemäss kontinuierlich hergestellte amorphe Natriumaluminiumsilikat kann durch Erwärmen auf eine Temperatur von beispielsweise 85 °C zu feinstteiligem Molekularsieb vom Typ NaA kristallisiert werden. Der zur Kristallisation erforderliche Zeitaufwand ist dabei nur sehr gering. Einzelheiten über die Durchführung der Kristallisation sowie über die Eigenschaften der kristallinen Produkte sind in den nachstehenden Beispielen angegeben. Bei Verzicht auf eine anschliessende Kristallisation des amorphen Reaktionsproduktes wird dieses direkt aufgearbeitet. Zur Aufarbeitung sowohl der amorphen als auch der kristallinen Produkte werden diese zunächst von der Mutterlauge abfiltriert, je nach den anwendungstechnischen Erfordernissen gewaschen und getrocknet oder gewünschtenfalls in sonstiger gebräuchlicher Weise konfektioniert. Mutterlauge und Waschwässer können in den Prozess zurückgeführt werden.

Die gewonnen Natriumaluminiumsilikate – insbesondere das Molekularsieb NaA – können vorzugsweise als heterogene anorganische Builderstoffe (Phosphatersatz) in Wasch-, Spül- und Reinigungsmitteln Verwendung finden.

In den nachfolgenden Beispielen wird die Durchführung des erfindungsgemässen Verfahrens näher erläutert.

Beispiele

Zur Durchführung der Beispiele wurde ein Rohrreaktor mit einem Gesamtvolumen von 200 l und einem Rohrdurchmesser (innen) von 38 mm verwendet; durch 44 Umlenkungen in Abständen von etwa 4 Metern war der Reaktor kompakt gebaut und erforderte eine Grundfläche von nur 20 Quadratmetern. Der Rohrreaktor war vollständig von einem Heizmantel (Heisswasser) umgeben, der in insgesamt 10 Zonen für unterschiedliche Beheizung (in den Beispielen stets die jeweils angegebene Fälltemperatur) unterteilt war.

Die nicht gesplittete Komponente sowie der Hauptstrom der zu splittenden Komponente (= 1. Teilstrom) wurden jeweils in den Eingang des Rohrreaktors 1 geleitet. Die Einleitungsstelle 2 für den 2. Teilstrom der gesplitteten Komponente war 5 m weiter stromabwärts, die Einleitungsstellen 3 und 4 für die Teilströme 3 und 4 befanden sich jeweils weitere 3 m stromabwärts. Die Ausgangskomponenten wurden in grossen Kesseln 5 und 6 vorgelegt und auf die angegebene Fälltemperatur aufgeheizt. Die Dosierung der Teilströme sowie des ungesplitteten Hauptstromes erfolgte über gesondert geeichte Dosiergeräte 7 (Schwebekörperdurchflussgeräte). Der Transport der Komponenten erfolgte mittels Kreiselpumpen 8.

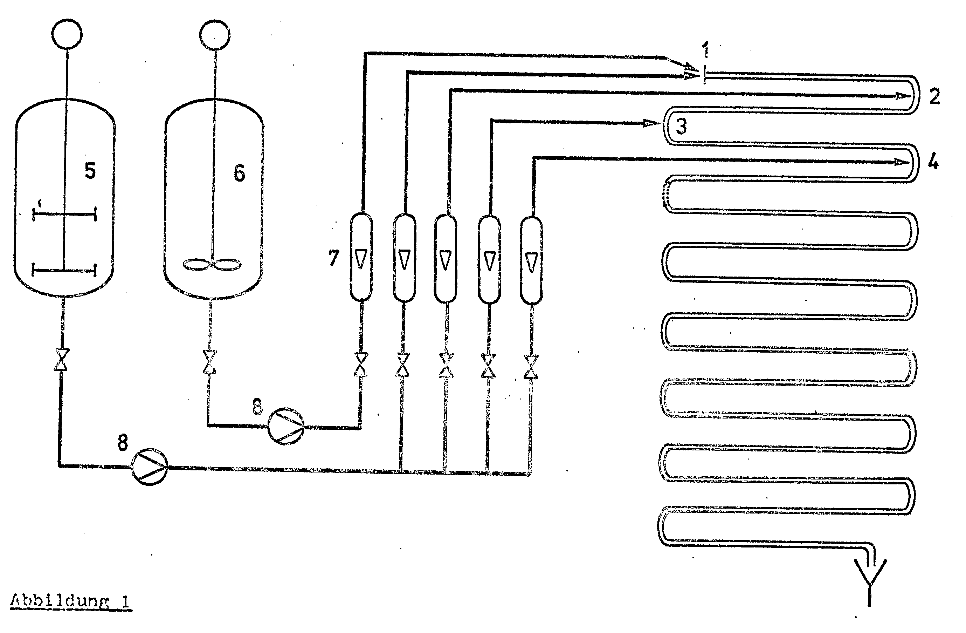

Die Versuchsanordnung, die für die Aufteilung einer der beiden Komponenten in bis zu 4 Teilströmen geeignet ist, lässt sich aus dem vereinfachten Fliessschema gemäss Abbildung 1 entnehmen.

Die Aluminatlösungen wurden aus feuchtem Hydrargillit mit 58% $Al_2O_3$ oder aus technischem Natriummetaaluminat (95%ig, 54% $Al_2O_3$ und 41% $Na_2O$) unter Zusatz von technischer 50%iger Natronlauge und entionisiertem Wasser zubereitet, die Silikatkomponente aus technischer Wasserglaslösung (8% $Na_2O$, 26,9% $SiO_2$), technischer 50%iger Natronlauge sowie rückgeführter Mutterlauge. Die Aluminat- und Silikatlösungen wurden von ihrem Einsatz filtriert, die Konzentrationen an Alkali, Aluminat bzw. Silikat analytisch bestimmt.

Aus dem kontinuierlich abfliessenden Produktstrom wurden Proben entnommen und zum Nachweis der Kristallisationsfähigkeit des erhaltenen amorphen Natriumaluminiumsilikats gesondert labormässig kristallisiert. Hierzu wurden jeweils 1.500 g der gewonnenen Suspension in einem 2 l-Dreihalskolben mit Heizpilz, Kontaktthermometer, aufgesetztem Rückflusskühler und Rührer bei 85 °C gerührt. Nach beendeter Kristallisation wurde der Feststoff abfiltriert und so lange mit 60 °C heissem entionisiertem Wasser gewaschen, bis das Waschwasser nur noch eine Restalkalität entsprechend pH 9 bis 10 aufwies.

Zur Charakterisierung wurden die gewaschenen Produkte über Nacht im Vakuumtrockenschrank bei 100 °C getrocknet, gut verrieben und mittels ihres Röntgendiagramms identifiziert. Die Zusammensetzung bezüglich $Na_2O$, $SiO_2$ und $Al_2O_3$ wurde röntgenfluoreszenzanalytisch bestimmt. Als Wassergehalt ist der Glühverlust nach einer Stunde bei 800 °C angegeben. Der Kristallhabitus wurde rasterelektronenmikroskopisch bestimmt, die Korngrössenverteilung mittels Coulter Counter[R] gemessen, der Nasssiebrückstand nach MOCKER unter Verwendung eines 25 µm-Siebes gemäss DIN 53580 (1 g Aktivsubstanz in 100 ml entionisiertem Wasser aufgeschlämmt, 1 Minute im Ultraschallbad homogenisiert, 5 Minuten Nasssiebung mit Wasserdruck von 4 bar und einer Strömungsgeschwindigkeit von 400 l Wasser pro Stunde; Rückwägung der getrockneten Siebe) ermittelt.

Das Calciumbindevermögen (= «CaBv») der getrockneten Produkte wurde entsprechend DE-A-24 12 837 (Seite 27) bei 22 ± 2 °C mit 1 g Aktivsubstanz pro Liter und 30° d (Deutsche Härte) Ausgangshärte nach 10 Minuten ermittelt und entsprechend als «mg CaO/g AS» (AS = Aktivsubstanz) angegeben.

Beispiele 1a bis 1k

In diesen Beispielen wurden unter Beibehaltung der übrigen Fällungsbedingungen nur die Konzentrationen und Dosierungen der eingesetzten Natriumaluminat- und Natriumsilikat-Lösungen variiert. Die Fällungen wurden im beschriebenen Rohrreaktor durchgeführt. Die Aluminatlösungen wurden aus feuchtem Hydrargillit hergestellt.

Die Silikatlösung wurde (ohne Aufspaltung in Teilströme) mit den in Tabelle 1 angegebenen Konzentrationen und Dosierungen kontinuierlich jeweils in den Eingang des Rohrreaktors gepumpt. Die Aluminatlösung wurde jeweils in vier Teilströme aufgesplittet: ein Strom mit 50% der nach Tabelle 1 erforderlichen Gesamtmenge wurde kontinuierlich zur Einleitungsstelle 1 geleitet, ein Strom von 30% der Gesamtmenge zur Einleitungsstelle 2 und zwei Ströme von je 10% der Gesamtmenge zu den Einleitungsstellen 3 und 4 des Rohrreaktors.

Das den Rohrreaktor kontinuierlich verlassende amorphe Reaktionsgemisch wies eine Temperatur von 65 bis 67 °C auf und war stets homogen und gut fliessfähig. Die Kornanteile grösser als 50 µm lagen unterhalb 1 Gew.-%. Die daraus nach 40 Minuten Kristallisation erhaltenen Produkte wurden in allen Fällen als hochkristallines, noch gebundenes Wasser enthaltendes Molekularsieb NaA mit einer chemischen Zusammensetzung entsprechend Molverhältnissen von

1,0 $Na_2O$ : 1,0 $Al_2O_3$ : 1,8 bis 2,0 $SiO_2$

identifiziert. Das CaBv lag oberhalb 160 mg CaO/g Aktivsubstanz. Alle Produkte wiesen eine mittlere Teilchengrösse unterhalb 7 µm bei Korngrössenanteilen kleiner als 10 µm von über 95 Vol.-% auf. Der Nasssiebrückstand nach MOCKER betrug weniger als 1 Gew.-%.

In der nachfolgenden Tabelle bedeuten:

a) = kg/Stunde

b) = bezogen auf $Al_2O_3$ = 1,0

c) = mittlere Teilchengrösse in µm nach Kristallisation (40 Minuten bei 85 °C).

Tabelle 1:
Beispiele mit unterschiedlichen Gesamtmolverhältnissen im Fällansatz unter Variation des Gesamtdurchsatzes (Fällung bei 65 °C, Splitting der Aluminatkomponente jeweils entsprechend 50% + 30% + 10% + 10%).

| Bei-spiel Nr. | Aluminatlösung | | | Silikatlösung | | | Gesamtmolver-haltnisse im Fällansatz b) | | | Gesamt-durch-satz (a) | |
|---|---|---|---|---|---|---|---|---|---|---|---|
| | % $Al_2O_3$ | % $Na_2O$ | Dossie-rung a) | % $SiO_2$ | % $Na_2O$ | Dosie-rung a) | $Na_2O$ : | $SiO_2$ : | $H_2O$ | | d c) |
| 1a | 12,92 | 14,06 | 592 | 12,35 | 7,85 | 474 | 2,6 | 1,3 | 60 | 1066 | 4,2 |
| 1b | 12,92 | 14,06 | 711 | 12,35 | 7,85 | 569 | 2,6 | 1,3 | 60 | 1280 | 4,7 |
| 1c | 12,92 | 14,06 | 395 | 13,11 | 12,19 | 458 | 3,6 | 2,0 | 70 | 853 | 4,2 |
| 1d | 12,92 | 14,06 | 592 | 13,11 | 12,19 | 686 | 3,6 | 2,0 | 70 | 1278 | 4,0 |
| 1e | 12,43 | 17,38 | 410 | 10,26 | 7,66 | 525 | 3,6 | 1,8 | 80 | 935 | 3,9 |
| 1f | 12,43 | 17,38 | 546 | 10,26 | 7,66 | 700 | 3,6 | 1,8 | 80 | 1246 | 4,0 |
| 1g | 10,12 | 18,45 | 504 | 6,36 | 8,77 | 849 | 5,4 | 1,8 | 120 | 1353 | 3,3 |
| 1h | 12,43 | 17,38 | 616 | 16,17 | 8,36 | 501 | 3,2 | 1,8 | 60 | 1117 | 4,5 |
| 1i | 10,12 | 18,45 | 588 | 8,47 | 6,81 | 744 | 4,4 | 1,8 | 100 | 1332 | 3,4 |
| 1k | 10,12 | 18,45 | 336 | 8,47 | 6,81 | 425 | 4,4 | 1,8 | 100 | 761 | 4,2 |

Beispiele 2a bis 2k

In diesen Beispielen wurden die Ansatz- und Konzentrationsverhältnisse während der Fällung konstant gehalten, dagegen die Aufteilung einer der beiden Komponenten in Teilströme sowie die Temperaturführung variiert. Die Aluminatlösung und die Silikatlösung wurden entsprechend Beispiel 1e dosiert, also mit insgesamt 410 kg Aluminatlösung (12,43% $Al_2O_3$ und 17,38% $Na_2O$) pro Stunde sowie insgesamt 525 kg Silikatlösung (10,26% $SiO_2$ und 7,66% $Na_2O$) pro Stunde; daraus resultierte ein Gesamtmolverhältnis im Fällansatz von

3,6 $Na_2O$ : 1,0 $Al_2O_3$ : 1,8 $SiO_2$ : 80 $H_2O$.

Die Aluminatlösung wurde aus technischem Natriummetaaluminat hergestellt.

Das Splitting der Komponenten (Aluminatlösung oder Silikatlösung) in unterschiedlich grosse Teilströme sowie die Temperatur der Komponenten kann den Angaben in Tabelle 2 entnommen werden.

Das den Rohrreaktor kontinuierlich verlassende amorphe Reaktionsgemisch wies eine Temperatur entsprechend der Fälltemperatur auf und war stets homogen und gut fliessfähig. Die Kornanteile grösser als 50 µm lagen unterhalb 1 Gew.-%.

Die nach 40 Minuten Kristallisation erhaltenen Produkte wurden in allen Fällen als hochkristallines, nicht gebundenes Wasser enthaltendes Molekularsieb NaA mit einer chemischen Zusammensetzung entsprechend Molverhältnissen von

1,0 $Na_2O$ · 1,0 $Al_2O_3$ · 1,8 $SiO_2$

identifiziert. Das Calciumbindevermögen lag bei oder oberhalb 150 mg CaO/g AS. Alle Produkte wiesen eine mittlere Teilchengrösse von unterhalb 7 µm bei Korngrössenanteilen kleiner als 10 µm von über 95 Vol.-% auf. Der Nasssiebrückstand nach MOCKER betrug weniger als 1 Gew.-%.

Die würfelförmigen Kristallite wiesen überwiegend abgerundete Kanten und eine Kantenlänge von 0,5 bis 7 µm auf.

In der nachfolgenden Tabelle bedeuten:

a) = mittlere Teilchengrösse in µm gemäss Coulter Counter nach 40 Minuten Kristallisation bei 85 °C

b) = Calciumbindevermögen nach 40 Minuten Kristallisation bei 85 °C.

Tabelle 2:
Beispiele mit unterschiedlichem Splitting der Komponenten unter Variation der Fälltemperatur (Dosierung und Molverhältnisse im Gesamtansatz entsprechend Beispiel 1e, vergleiche Tabelle 1)

| Bei-spiel Nr. | Splitting der Aluminatlösung in %-Anteilen | Splitting der Silikatlösung in %-Anteilen | Fällungs-temperatur | d a) | CaBv b) |
|---|---|---|---|---|---|
| 1e | 50+30+10+10 | ungesplittet | 65 °C | 3,9 | 165 |
| 2a | 60+20+20 | | | 4,2 | 168 |
| 2b | 50+30+20 | ungesplittet | 65 °C | 4,2 | 164 |

Tabelle 2: (Fortsetzung)

| Bei-spiel Nr. | Splitting der Aluminatlösung in %-Anteilen | Splitting der Silikatlösung in %-Anteilen | Fällungs-temperatur | d a) | CaBv b) |
|---|---|---|---|---|---|
| 2c | 40+40+20 | | | 4,3 | 163 |
| 2d | 60+20+10+10 | | | 4,2 | 172 |
| 2e | 40+30+20+10 | | | 4,1 | 168 |
| 2f | 50+30+10+10 | | 80 °C | 3,6 | 155 |
| 2g | | 50+30+10+10 | 65 °C | 4,8 | 157 |
| 2h | ungesplittet | 40+30+20+10 | 65 °C | 5,0 | 160 |
| 2i | | 40+40+20 | 50 °C | 5,4 | 155 |

**Patentansprüche:**

1. Verfahren zur kontinuierlichen Herstellung einer wässrigen, alkalischen Suspension feinteiliger röntgenamorpher Natriumaluminiumsilikate, die zu mindestens 99 Vol.-% eine Teilchengrösse von kleiner als 50 µm aufweisen und zur Umwandlung in feinstteilige zeolithische Natriumaluminiumsilikate befähigt sind, durch Vermischen einer wässrigen Natriumaluminatlösung mit einer wässrigen Natriumsilikatlösung in Gegenwart überschüssiger Natronlauge bei Temperaturen im Bereich von 20 bis 103 °C, wobei die beiden zu vermischenden Lösungen eine rechnerische Gesamtzusammensetzung bezüglich der Molverhältnisse von

1,5 bis 9 $Na_2O$ : 1 $Al_2O_3$ : 1 bis 7 $SiO_2$ : 40 bis 400 $H_2O$

aufweisen, dadurch gekennzeichnet, dass man eine der beiden Reaktionskomponenten kontinuierlich in eine stufig wirkende Mischstrecke einströmen lässt und die zweite Reaktionskomponente aufgeteilt in drei oder mehr Teilströme, deren Dosierung insgesamt durch die rechnerische Gesamtzusammensetzung der beiden Lösungen vorgegeben ist, mit der ersten Reaktionskomponente vermischt, wobei man den ersten Teilstrom dem Strom der ersten Reaktionskomponente unmittelbar kontinuierlich zufügt und die weiteren Teilströme dem Strom des gebildeten Reaktionsgemisches erst stromabwärts, jeweils nach einer mittleren Verweilzeit der Reaktionspartner in der Mischstrecke von mindestens 5 Sekunden, gleichfalls kontinuierlich zudosiert.

2. Verfahren nach Anspruch 1, dadurch gekennzeichnet, dass man mit dem ersten Teilstrom zunächst zur 40 bis 60% der zweiten Reaktionskomponente, bezogen auf das durch die rechnerische Gesamtzusammensetzung vorgegebene Verhältnis der beiden Lösungen, dem Strom der ersten Reaktionskomponente kontinuierlich zufügt.

3. Verfahren nach Anspruch 1 und 2, dadurch gekennzeichnet, dass man den Rest der zweiten Reaktionskomponente dem Strom des Reaktionsgemisches in zwei bis vier Teilströmen zudosiert, wobei die einzelnen Teilströme stromabwärts jeweils gleiche oder geringere prozentuale Anteile der zweiten Reaktionskomponente, bezogen auf das durch die rechnerische Gesamtzusammensetzung vorgegebene Verhältnis der beiden Lösungen, umfassen.

4. Verfahren nach Anspruch 1 bis 3, dadurch gekennzeichnet, dass man die Aluminatlösung als zweite Reaktionskomponente in Teilströme aufteilt.

5. Verfahren nach Anspruch 1 bis 4, dadurch gekennzeichnet, dass man das Vermischen der beiden Reaktionskomponenten bei einer bis auf Abweichungen von ± 2 °C konstanten Temperatur, vorzugsweise im Bereich von 50 bis 80 °C, durchführt.

6. Verfahren nach Anspruch 1 bis 5, dadurch gekennzeichnet, dass man die einzelnen Teilströme der zweiten Reaktionskomponente jeweils in unterschiedliche Abschnitte eines Rohrreaktors, der ein Verhältnis von Rohrlänge zu Rohrdurchmesser von mehr als 500 aufweist, einführt.

7. Verfahren nach Anspruch 1 bis 6, dadurch gekennzeichnet, dass man den Gesamtproduktstrom, bestehend aus dem Strom der ersten Reaktionskomponente einerseits sowie den Teilströmen der zweiten Reaktionskomponente andererseits, insgesamt mit einer Dosiergeschwindigkeit von 2 bis 20 m³ Lösung, vorzugsweise mehr als 3 m³ Lösung, pro Kubikmeter Mischervolumen und Stunde in den Rohrreaktor einströmen lässt, wobei die mittlere Verweilzeit der Reaktionspartner insgesamt im Rohrreaktor 3 bis 30 Minuten, vorzugsweise 5 bis 20 Minuten beträgt.

**Revendications**

1. Procédé de fabrication en continu d'une suspension alcaline aqueuse de silicates de sodium et d'aluminium finement divisés, amorphes aux rayons X, qui présentent au moins 99% en volume d'une dimension de particule inférieure à 50 µ et qui sont susceptibles d'une conversion en silicates de sodium et d'aluminium zéolitiques très finement divisés, par mélange d'une solution aqueuse d'aluminate de sodium avec une solution aqueuse de silicate de sodium en présence de soude caustique en excès à des températures dans l'intervalle de 20 à 103 °C, les deux solutions à mélanger présentant une composition globale calculée quant aux proportions molaires de

1,5 à 9 Na$_2$O : 1 Al$_2$O$_3$ : 1 à 7 SiO$_2$ : 40 à 400 H$_2$O, caractérisé en ce qu'on introduit un des deux composants réactionnels continuellement dans une étendue de mélange à action étagée et en ce qu'on mélange avec le premier composant réactionnel de deuxième composant réactionnel partagé en trois courants partiels ou davantage, dont l'alimentation en tout est indiquée d'avance par la composition globale calculée des deux solutions en ajoutant le premier courant partiel au courant du premier composant réactionnel directement et continuellement et en alimentant, également continuellement, les autres courants partiels au courant du mélange de réaction formé, uniquement en aval, chaque fois après un temps de séjour moyen des partenaires de réaction dans l'étendue de mélange d'au moins 5 secondes.

2. Procédé selon la revendication 1, caractérisé en ce qu'à l'aide du premier courant partiel on n'ajoute de manière continue au courant du premier composant réactionnel d'abord de 40 à 60% du second composant réactionnel relativement au rapport des deux solutions imposé d'avance par la composition globale calculée.

3. Procédé selon les revendications 1 et 2, caractérisé en ce qu'on alimente le restant du deuxième composant réactionnel au courants du mélange de réaction en deux à quatre courants partiels, les courants partiels individuels en aval comportant chaque fois des pourcentages égaux ou inférieurs du second composant réactionnel relativement au rapport imposé d'avance des deux solutions par la composition globale calculée.

4. Procédé selon les revendications 1 à 3, caractérisé en ce qu'on scinde la solution d'aluminate en courants partiels en tant que deuxième composant réactionnel.

5. Procédé selon les revendications 1 à 4, caractérisé en ce qu'on exécute le mélange des deux composants réactionnels à une température constante avec une tolérance d'écarts de ±2 °C, de préférence dans l'intervalle de 50 à 80 °C.

6. Procédé selon les revendications 1 à 5, caractérisé en ce qu'on introduit les divers courants partiels du second composant réactionnel chaque fois dans des sections différentes d'un réacteur tubulaire qui présente un rapport longueur de tube/diamètre de tube de plus de 500.

7. Procédé selon les revendications 1 à 6, caractérisé en ce qu'on introduit le courant de produit global, consistant en le courant du premier composant réactionnel, d'une part, et en les courants partiels du second composant réactionnel, d'autre part, le tout à une vitesse d'alimentation de 2 à 20 m$^3$ de solution, de préférence de plus de 3 m$^3$ de solution par m$^3$ de volume de mélangeur et par heure dans le réacteur tubulaire, le temps de séjour moyen des partenaires de réaction s'élevant en tout dans le réacteur tubulaire à 3 – 30 minutes, de préférence à 5 – 20 minutes.

**Claims**

1. A process for the continuous production of an aqueous alkaline suspension of finely particulate X-ray-amorphous sodium aluminium silicates, of which at least 99% by volume have a particle size of less than 50 µm and are capable of being converted into very finely particulate zeolitic sodium aluminium silicates, by mixing an aqueous sodium aluminate solution with an aqueous sodium silicate solution in the presence-of excess sodium hydroxide at temperatures in the range from 20 to 103 °C, the two solutions to be mixed having a mathematical overall composition in regard to the molar ratios of

1.5–9 Na$_2$O: 1 Al$_2$O$_3$:1–7 SiO$_2$:40–400 H$_2$O characterised in that one of the two reaction components is allowed to flow continuously into a graduated mixing zone and the second reaction component is divided up into three or more component streams, of which the proportioning is determined in overall terms by the mathematical composition of the two solutions as a whole, and mixed in that form with the first reaction component, the first component stream being added directly and continuously to the stream of the first reaction component and the other component streams being added – again continuously – to the stream of reaction mixture formed at points situated downstream, in each case after an average residence time of the reactants in the mixing zone of at least five seconds.

2. A process as claimed in Claim 1, characterised in that initially only 40 to 60% of the second reaction component, based on the ratio between the two solutions as determined by their overall mathematical composition, is continuously added through the first component stream to the stream of the first reaction component.

3. A process as claimed in Claims 1 and 2, characterised in that the remainder of the second reaction component is added to the stream of reaction mixture in two to four component streams, the individual component streams containing equal or smaller percentages of the second reaction component, based on the ratio between the two solutions as determined by their overall mathematical composition, in the downstream direction.

4. A process as claimed in Claims 1 to 3, characterised in that the aluminate solution is divided into component streams as the second reaction component.

5. A process as claimed in Claims 1 to 4, characterised in that the two reaction components are mixed at a temperature which is constant to ±2 °C and preferably at a temperature in the range from 50 to 80 °C.

6. A Process as claimed in Claims 1 to 5, characterised in that the individual component streams of the second reaction component are each introduced into different sections of a tube reactor which has a length to diameter ratio of more than 500.

7. A process as claimed in Claims 1 to 6, characterised in that the overall product stream consisting of the stream of the first reaction component on the one hand and of the component streams of the second reaction component on the other hand is allowed to flow into the tube reactor at an overall metering rate of from 2 to 20 cubic metres of solution and preferably of more than 3 cubic metres of solution per cubic metre of mixer volume per hour, the average residence time of the reactants in the tube reactor amounting in all to between 3 and 30 minutes and preferably to between 5 and 20 minutes.

Abbildung 1

11